# EUROPÄISCHE PATENTSCHRIFT

(11) **EP 1 750 494 B1**
(45) Veröffentlichungstag und Bekanntmachung des Hinweises auf die Patenterteilung: **16.01.2013**
(21) Anmeldenummer: 05748125.1
(22) Anmeldetag: 31.05.2005
(51) Int. Cl.: A01B 21/08

(54) **SCHEIBENGERÄT**
DISK DEVICE
MACHINE A DISQUES

(30) Priorität: 02.06.2004 DE 102004026880
(43) Veröffentlichungstag der Anmeldung: 14.02.2007
(73) Patentinhaber: Amazonen-Werke H. Dreyer GmbH & Co. KG, 49202 Hasbergen/Gaste (DE)
(72) Erfinder: DREYER, Heinz, 49205 Hasbergen (DE)
(86) Internationale Anmeldenummer: PCT/EP2005/005847
(87) Internationale Veröffentlichungsnummer: WO 2005/117563

(56) Entgegenhaltungen:
- EP-A- 1 210 854
- WO-A-2004/004438
- DE-U1- 20 023 129
- DE-U1-202004 001 397
- US-A- 5 394 945

## Beschreibung

Die Erfindung betrifft ein Scheibengerät gemäß des Oberbegriffes des Patentanspruches 1.

Ein derartiges Scheibengerät ist beispielsweise in der DE 200 23129 U1, der WO2004/004438 A1, den DE 202004 001 39741 oder US5394945 beschrieben. Bei diesem Scheibengerät sind die einzelnen Arme mittels einer Gummilagerung an quer zur Fahrtrichtung verlaufenden Trägern angeordnet. Die quer zur Fahrtrichtung verlaufenden Träger können mittels eines Verschiebungselementes, welches beispielweise als Schraubspindel, Hydraulikzylinder oder pneumatischer Stellzylinder ausgebildet sein kann, zueinander verstellt werden, so dass die Scheiben der hinteren Reihe jeweils etwa mittig bzgl. des Zwischenraumes zwischen den Scheiben der vorderen Reihe angeordnet sind, um so die vordere und hintere Reihe zueinander derart auszurichten, dass eine ganzflächige Bodenbearbeitung erreicht wird. Aufgrund der Gummilagerung der Arme an den Trägem weichen die Scheiben je nach den vorliegenden Einsatzbedingungen, d.h. Bodenbeschaffenheit unterschiedlich weit aus, so dass bei den verschiedenen Einsatzverhältnissen unterschiedliche Einstellungen des vorderen Tragbalkens zu dem hinteren bzw. der daran angeordneten Scheiben erforderlich ist.

Eine unterschiedliche Auslenkung der Arme ist auch bei verschiedenen Fahrgeschwindigkeiten zu beobachten.

Bisher geht man so vor, dass nach einer gewissen Bearbeitungsstrecke auf einem Teilbereich des bearbeiteten Bodens die lockere Bodenschicht, die von den Scheiben abgeschnitten worden ist, entfernt wird, um festzustellen, ob eine ganzflächige Bodenbearbeitung stattgefunden hat. Mittels der Verschiebungselemente kann dann ertorderlichenfalls eine Nachstellung der Scheiben zueinander erfolgen, so dass eine ganzflächige Bodenbearbeitung erreicht wird. Das Forträumen der lockeren Bodenschicht ist jedoch relativ aufwendig und mühsam. Auch kann während der Bearbeitung nicht festgestellt werden, ob bei evtl. wechselnden Bodenverhältnissen immer noch eine ganzflächige Bodenbearbeitung erfolgt.

Die gleiche Problematik tritt auf, wenn das Scheibengerät zur Unkrautbekämpfung in Reihenkulturen eingesetzt wird. Hierbei weichen die mit Gummielementen an dem Träger gelagerten Arme mit ihren Scheiben je nach Bodenbeschaffenheit und Fahrgeschwindigkeit unterschiedlich weit aus, so dass eine Nachstellung der Träger erforderlich wird, um die Scheiben entsprechend ausreichend nah oder bei zu großer Auslenkung ausreichend weit von den Pflanzenreihenkulturen entfernt einzustellen.

Der Erfindung liegt die Aufgabe zugrunde, eine an die jeweiligen Einsatzverhältnisse angepasste Nachstellung bzw. Einstellung der Scheiben der vorderen und hinteren Querreihe eines Scheibengerätes zueinander für den Fahrer der das Scheibengerät ziehende Zugfahrzeuges in einfacher Weise zu ermöglichen.

Diese Aufgabe wird erfindungsgemäß dadurch gelöst, dass eine Anzeigeeinrichtung zur Anzeige und/oder Ermittlung der Positionen der an den vorderen und hinteren Trägem angeordneten Scheiben zueinander vorgesehen ist. Infolge dieser Maßnahme ist es möglich, anhand der Anzeigeeinrichtung das Einstellelement zur Festlegung der Verschiebung des Trägers in dessen Längsrichtung und somit die Position der hinteren zu den vorderen Scheiben und umgedreht entsprechend der von der Anzeigevorrichtung zur Anzeige gebrachten Einstellungen einzustellen.

Wenn das Einstellelement als Verschiebungselement zur Verschiebung einer der Träger ausgebildet ist, kann anhand der an der Anzeigevorrichtung zur Anzeige gebrachten Position der Scheiben zueinander vom Schleppersitz aus vom Fahrer über eine entsprechende Fernbedienungseinrichtung das Verschiebungselement entsprechend betätigt werden, um die Ein- und/oder Nachstellung vorzunehmen.

Um die erforderliche Einstellung zur Anzeige zu bringen, ist vorgesehen, dass an zumindest einem an dem vorderen Träger angeordneten Arm und zumindest einem an dem hinteren Träger angeordneten Arm jeweils ein Abtastelement der Anzeigeeinrichtung angeordnet ist.

In einer einfachen Ausgestaltung kann die Anzeigevorrichtung aus jeweils einem vorderen und einem hinteren Arm angeordneten Zeigerelement bestehen. Hierbei kann dieses Zeigerelement auch ein Schleppelement aufweisen, um so in einfachster Weise den Wert der maximalen Auslenkung, entsprechend der die Träger der hinteren und vorderen Reihe mit den Scheiben zueinander eingestellt werden sollen, anzuzeigen. Hierbei kann die Skala für das Zeigerelement als eine direkte Anzeige für die Einstellung der Einstellelemente ausgelegt sein.

Eine automatische Einstellung der vorderen und hinteren Scheiben zueinander über eine Verschiebung der Träger, an denen die Scheiben angeordnet sind, lässt sich dadurch verwirklichen, dass die Anzeigeeinrichtung an das als motorisches Stellelement ausgebildete Verschiebungselement Stellimpulse übermittelt.

Eine Ausgestaltung der Anzeigevorrichtung kann dadurch verwirklicht werden, dass die Anzeigevorrichtung jeweils als zwischen zumindest einem an dem vorderen Träger angeordneten Arm und zumindest einem an dem hinteren Träger angeordneten Arm angeordneten Winkelgeber ausgebildet ist.

Damit der Fahrer in einfacher Weise die erforderlichen Einstellwerte ablesen kann, ist vorgesehen, dass die Anzeigevorrichtung ein Display aufweist.

Des Weiteren ist erfindungsgemäß vorgesehen, dass die Anzeigevorrichtung zwischen dem jeweiligen Träger und Arm der vorderen und hinteren Querreihe angeordnete Sensorelemente aufweist, welche Signale an eine elektrische und/elektronische Auswerteeinheit übermitteln, und dass von der Auswerteeinheit entsprechend hinterlegter Einstelldaten auf Grundlage der übermittelten Daten an das Verschiebeelement entsprechende Steuerimpulse übermittelt werden. Infolge dieser Maßnahme wird entsprechend der hinterlegten Daten in einfacher Weise das Verschiebeelement angesteuert, so dass die Scheiben der vorderen und hinteren Reihe automatisch entsprechend der jeweils vorherrschenden Bedingungen optimal eingestellt werden.

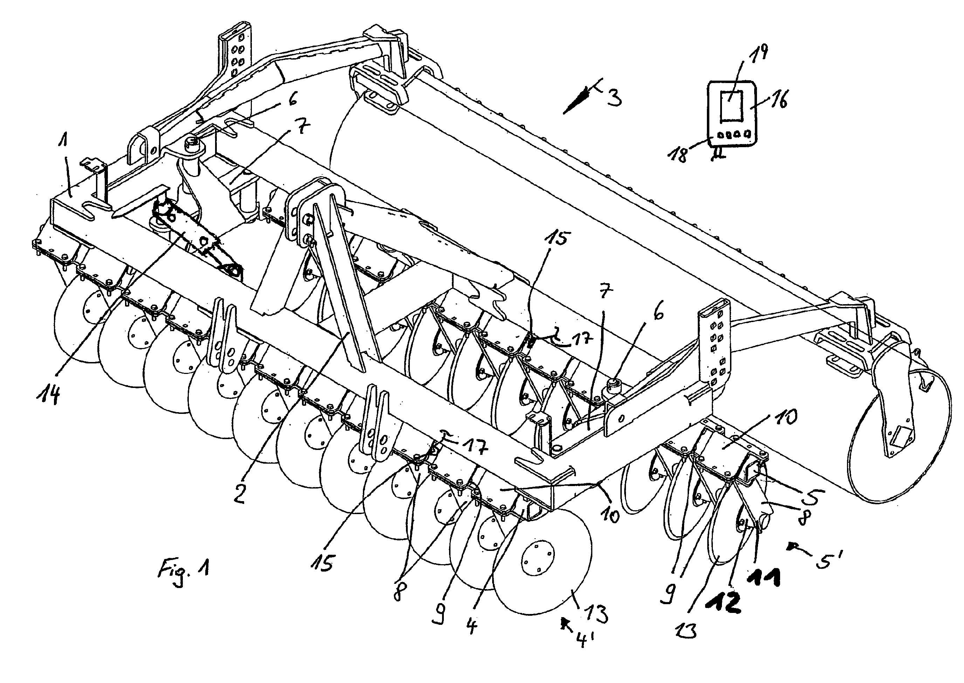

Weitere Einzelheiten der Erfindung sind der Beispielsbeschreibung und den Zeichnungen zu entnehmen. Hierbei zeigen
- Fig. 1: das Scheibengerät in perspektivischer Darstellung und

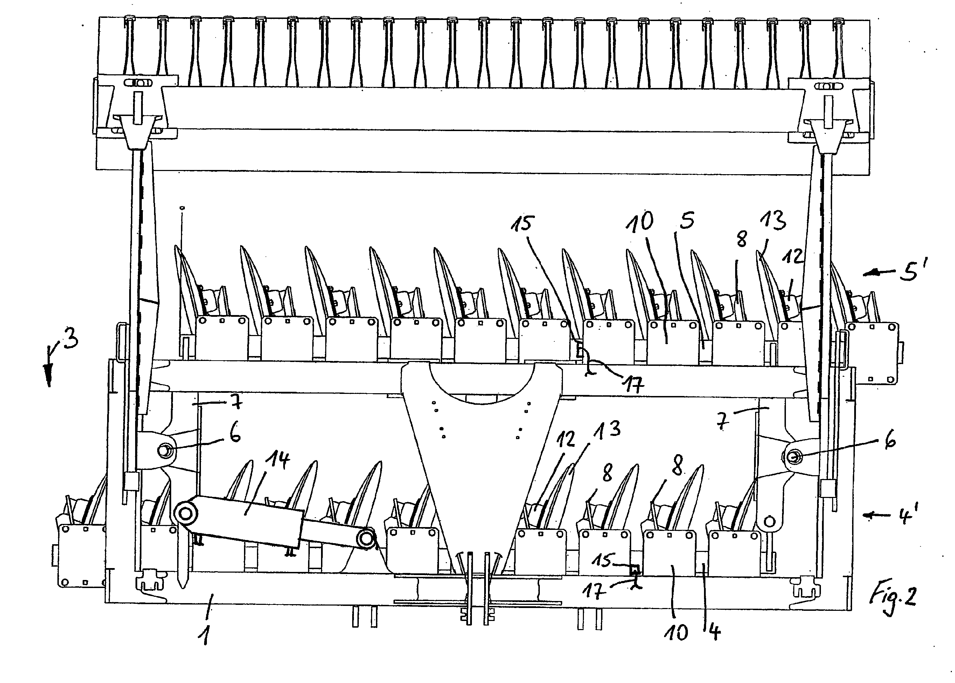

- Fig. 2: das Scheibengerät in Draufsicht.

Das Scheibengerät weist den Tragrahmen 1 mit dem Dreipunktanbaubock 2 auf. An dem Tragrahmen 1 sind zwei hintereinander und zumindest annähernd parallel zueinander und quer zur Bewegungsrichtung 3 des Scheibengerätes verlaufenden Träger 4 und 5 angeordnet. Diese Träger 4,5 sind über als um aufrechte Achsen 6 verschwenkbare Schwingen 7 ausgebildete Halterungselemente am Rahmen angeordnet. An dem Träger 4 und 5 sind eine Vielzahl von Armen 12 mittels einer eine Gummifederung 9 aufweisenden Gelenkhalterung 10 angeordnet. An dem unteren Ende 11 der Arme 12 sind mittels einer Lagerung 12 frei drehbare Scheiben 13 angeordnet. Die Scheiben 13 der vorderen Reihe 4' sind entgegengesetzt schräg zu den Scheiben 14 der hinteren Reihe 5' angeordnet. Aufgrund der Gummifederung 9, die zwischen den Trägem 4 und 5 und der Halterung 10 der Arme 8 angeordnet sind, ist jeder Arm 8 elastisch an dem zugeordneten Träger 4, 5 aufgehängt. Zwischen der Halterung 7 der Träger 4, 5 bzw. den Trägern 4, 5 selbst und dem Rahmen 1 ist ein Einstellelement 14 zur Einstellung der Scheiben 13 der vorderen Reihe 4' zu den Scheiben 13 der hinteren Reihe 5' angeordnet. Mittels dieses Einstellelementes 14 kann der Verschiebeweg der Träger 4 und 5 mit den daran angeordneten Scheiben 13 in Längsrichtung der Träger 4 und 5 festgelegt und eingestellt werden. Mittels dieses Einstellelementes 14, welches im Ausführungsbeispiel als doppeltwirkender Hydraulikzylinder ausgebildet ist, können die Scheiben 14 der vorderen Reihe 4 zu den Scheiben 14 der hinteren Reihe 5' ihre Arbeitsposition zueinander und zum Rahmen 1 des Scheibengerätes eingestellt werden.

Das Einstellmittel 14 zur Festlegung des Verschiebeweges und der Arbeitsposition der Scheiben 13 zueinander kann in unterschiedlicher Weise ausgebildet sein. Dieses Einstellmittel 14 kann beispielsweise als Einstellschraube, doppeltwirkender Hydraulikzylinder, elektrisch betätigbare Schraubspindel oder Einstellmotor, oder als verstellbarer Anschlagbolzen ausgebildet sein.

Somit kann also das Einstellelement 15 als aktives Verschiebungselement zur Verschiebung der Träger zueinander oder nur als Einstellmittel selbst ausgebildet sein.

An zumindest einer Gelenkhalterung 10 bzw. einem Tragarm 8 sowie dem quer zur Fahrtrichtung 3 verlaufenden Träger 4, 5 ist ein Sensorelement 15 einer Anzeigeeinrichtung 17 oder eine Anzeigeeinrichtung selbst zur Anzeige und/oder Ermittlung der Position der an den vorderen und hinteren Trägem 4, 5 angeordneten Scheiben 13 zueinander angeordnet. Mittels dieser Anzeigeeinrichtung 16 kann die Position der Scheiben 13 der vorderen und hinteren Reihe 4', 5' zueinander ermittelt werden. Somit ist zu ermitteln, ob die Scheiben 13 der vorderen und hinteren Reihe 4', 5' derart zueinander eingestellt sind, dass eine ganzflächige Bodenbearbeitung erreicht wird. Hierbei tastet dieses Element 15, 16 an zumindest einem an dem vorderen Träger 4 angeordneten Arm 8 und zumindest einem an einem dem hinteren Träger 5 angeordneten Arm 8 durch das Abtastelement 15 der Anzeigeeinrichtung 16 die Stellung des Armes 8 bzw. der Scheibe 13 ab. Weiterhin wird auch die Position der Träger 4 und 5 zueinander berücksichtigt.

Im Ausführungsbeispiel ist das Abstandselement 15 als Sensorelement ausgebildet, welches über Übertragungsmittel 17 Signale an eine elektrische oder elektronische Auswerteeinheit 18 übermittelt. In der Auswerteeinheit 18 ist ein entsprechendes Auswerteprogramm hinterlegt, mittels welchem entsprechend hinterlegter Einstelldaten auf Grundlage der übermittelten Daten die erforderliche Einstellung der hinteren und vorderen Träger 4, 5 zueinander auf einer an dem Display 19 einer Anzeigevorrichtung 16 angezeigt wird oder es werden direkt von der Auswerteeinheit 18 entsprechend der hinterlegten Einstelldaten auf Grundlage der übermittelten Daten an das Verschiebeelement 14 bzw. dessen Steuereinheit entsprechende Steuerimpulse übermittelt, so dass automatisch die vordere Scheibenreihe 4' richtig zur hinteren Scheibenreihe 5' oder umgedreht einstellt werden.

Es ist auch möglich, das Sensorelement 15 beispielweise als Winkelgeber auszubilden.

In einer einfachen nicht dargestellten Ausgestaltung kann an einem Träger bzw. dessen Halterung ein mechanisches Anzeigeelement, welches mit einer Skala zusammenwirkt bzw. die beiden Anzeigenelemente selbst zusammenwirken ausgebildet sein. In diesem Falle ist es dann erforderlich, dass über Handbetätigung die Einstellmittel zur Festlegung der Position der hinteren und vorderen Scheiben zueinander entsprechend eingestellt werden.

## Patentansprüche

1. Scheibengerät, das zur Bodenkultivierung geeignet ist, wobei das Scheibengerät zwei hintereinander und zumindest annähernd parallel zueinander angeordnete und quer zur Bewegungsrichtung des Scheibengerätes laufende und zueinander verschiebbare Träger aufweist, wobei jeder Träger mit einer Vielzahl von Armen versehen ist, die mit wenigstens einer schräg angestellten und frei drehbaren Scheibe versehen sind, wobei jeder Arm elastisch an dem zugeordneten Träger aufgehängt ist, wobei entsprechende Scheiben an dem ersten und zweiten Träger so angeordnet sind, dass die Scheiben an dem ersten Träger entgegengesetzt schräg zu den an dem zweiten Träger angeordneten Scheiben angeordnet sind, wobei wenigstens ein Einstellelement für den ersten und/oder zweiten Träger zur Festlegung dessen Verschiebeweg in dessen Längsrichtung vorgesehen ist, welches zur Festlegung der im wesentlichen parallelen Träger in wenigstens eine bestimmte Arbeitsposition zueinander und/oder zum Rahmen des Scheibengerätes ausgebildet ist, **dadurch gekennzeichnet, dass** eine Anzeigeeinrichtung (16) zur Anzeige und/oder Ermittlung der Positionen der an den vorderen und hinteren Trägern (4,5) angeordneten Scheiben (13) zueinander vorgesehen ist.

2. Scheibengerät nach Anspruch 1, **dadurch gekennzeichnet, dass** das Einstellelement (14) als Verschiebungselement (14) zur Verschiebung zumindest einer der Träger (4,5) ausgebildet ist.

3. Scheibengerät nach Anspruch 1, **dadurch gekennzeichnet, dass** an zumindest einem an dem vorderen Träger (4) angeordneten Arm (8) und zumindest einem an dem hinteren Träger (5) angeordneten Arm (8) jeweils ein Abtastelement (15) der Anzeigeeinrichtung (16) angeordnet ist.

4. Scheibengerät nach Anspruch 1, **dadurch gekennzeichnet, dass** die Anzeigeeinrichtung (16) aus jeweils einem vorderen und einem hinteren Arm angeordneten Zeigerelement steht.

5. Scheibengerät nach Anspruch 2, **dadurch gekennzeichnet, dass** die Anzeigeeinrichtung (16) an das als motorisches Stellelement (14) ausgebildete Verschiebungselement Stellimpulse übermittelt.

6. Scheibengerät nach Anspruch 1, **dadurch gekennzeichnet, dass** die Anzeigevorrichtung (16) jeweils als zwischen zumindest einem an dem vorderen Träger (4) angeordneten Arm (8) und zumindest einem an dem hinteren Träger (5) angeordneten Arm (8) angeordneten Winkelgeber ausgebildet ist.

7. Scheibengerät nach Anspruch 1, **dadurch gekennzeichnet, dass** die Anzeigevorrichtung (16) ein Display (19) aufweist.

8. Scheibengerät nach Anspruch 2, **dadurch gekennzeichnet, dass** die Anzeigevorrichtung (16) zwischen dem jeweiligen Träger (4,5) und Arm (8) der vorderen und hinteren Querreihe (4',5')angeordnete Sensorelemente (15) aufweist, welche Signale an eine elektrische und/elektronische Auswerteeinheit (16,18) übermitteln, und dass von der Auswerteeinheit (16,18) entsprechend hinterlegter Einstelldaten auf Grundlage der übermittelten Daten an das Verschiebeelement (14) entsprechende Steuerimpulse übermittelt werden.

## Claims

1. Discer which is suitable for soil cultivation, wherein the discer has two carriers that are arranged in succession and at least approximately parallel to one another, extend transversely to the direction of movement of the discer and are displaceable in relation to one another, wherein each carrier is provided with a multiplicity of arms which are provided with at least one obliquely positioned and freely rotatable disc, wherein each arm is suspended elastically on the associated carrier, wherein corresponding discs are arranged on the first and second carriers such that the discs are arranged on the first carrier in a manner inclined in the opposite direction to the discs arranged on the second carrier, wherein at least one setting element for the first and/or second carrier is provided to set the displacement travel in the longitudinal direction thereof, said setting element being designed to set the substantially parallel carriers in at least one determined working position with respect to one another and/or with respect to the frame of the discer, **characterized in that** an indicator device (16) for indicating and/or determining the relative positions of the discs (13) arranged on the front and rear carriers (4, 5) is provided.

2. Discer according to Claim 1, **characterized in that** the setting element (14) is in the form of a displacement element (14) for displacing at least one of the carriers (4, 5) .

3. Discer according to Claim 1, **characterized in that** in each case a sensing element (15) of the indicator device (16) is arranged on at least one arm (8) arranged on the front carrier (4) and on at least one arm (8) arranged on the rear carrier (5).

4. Discer according to Claim 1, **characterized in that** the indicator device (16) consists of in each case one pointer element arranged on a front arm and on a rear arm.

5. Discer according to Claim 2, **characterized in that** the indicator device (16) transmits actuating pulses to the displacement element which is in the form of a motor-driven actuator element (14).

6. Discer according to Claim 1, **characterized in that** the indicator device (16) is formed in each case as an angle sensor arranged between at least one arm (8) arranged on the front carrier (4) and at least one arm (8) arranged on the rear carrier (5).

7. Discer according to Claim 1, **characterized in that** the indicator device (16) has a display (19).

8. Discer according to Claim 2, **characterized in that** the indicator device (16) has sensor elements (15) arranged between each carrier (4, 5) and arm (8) of the front and rear transverse rows (4', 5'), said sensors transmitting signals to an electric and/or electronic evaluation unit (16, 18), and **in that** corresponding control pulses are transmitted by the evaluation unit (16, 18) to the displacement element (14) in accordance with stored setting data on the basis of the transmitted data.

## Revendications

1. Machine à disques appropriée pour cultiver le sol, la machine à disques présentant deux supports disposés l'un derrière l'autre et au moins pratiquement parallèlement l'un à l'autre, qui s'étendent transversalement par rapport au sens de déplacement de la machine à disques et qui peuvent être déplacés l'un par rapport à l'autre, chaque support étant doté d'une pluralité de bras qui sont pourvus d'au moins un disque incliné et pouvant tourner librement, chaque bras étant suspendu de manière élastique au support associé, des disques respectifs étant disposés sur les premier et second supports de manière telle que les disques sur le premier support soient inclinés dans le sens opposé par rapport aux disques sur le second support, au moins un élément de réglage pour le premier et/ou le second support étant prévu pour fixer la course de déplacement dudit support dans son sens longitudinal, ledit élément de réglage étant conçu pour fixer les supports essentiellement parallèles dans au moins une position de travail déterminée l'un par rapport à l'autre et/ou par rapport au cadre de la machine à disques, **caractérisée en ce qu'**un dispositif d'affichage (16) est prévu pour afficher et/ou déterminer les positions des disques (13) disposés sur les supports avant et arrière (4, 5), les uns par rapport aux autres.

2. Machine à disques selon la revendication 1, **caractérisée en ce que** l'élément de réglage (14) est réalisé sous forme d'élément déplaçable (14) pour déplacer au moins l'un des supports (4, 5).

3. Machine à disques selon la revendication 1, **caractérisée en ce qu'**un élément de balayage (15) du dispositif d'affichage (16) est à chaque fois disposé sur au moins un bras (8) disposé sur le support avant (4) et au moins un bras (8) disposé sur le support arrière (5).

4. Machine à disques selon la revendication 1, **caractérisée en ce que** le dispositif d'affichage (16) se compose à chaque fois d'un élément indicateur disposé sur un bras avant et un bras arrière.

5. Machine à disques selon la revendication 2, **caractérisée en ce que** le dispositif d'affichage (16) transmet des impulsions de réglage à l'élément déplaçable réalisé sous forme d'élément de réglage (14) à moteur.

6. Machine à disques selon la revendication 1, **caractérisée en ce que** le dispositif d'affichage (16) est réalisé à chaque fois en tant que détecteur d'angle disposé entre au moins un bras (8) disposé sur le support avant (4) et au moins un bras (8) disposé sur le support arrière (5).

7. Machine à disques selon la revendication 1, **caractérisée en ce que** le dispositif d'affichage (16) présente un affichage (19).

8. Machine à disques selon la revendication 2, **caractérisée en ce que** le dispositif d'affichage (16) présente des éléments de capteur (15) disposés entre le support respectif (4, 5) et le bras (8) des rangées transversales avant et arrière (4', 5'), lesquels transmettent des signaux à une unité d'analyse électrique et/ou électronique (16, 18), et **en ce que** des impulsions de commande sont transmises à l'élément déplaçable (14) par l'unité d'analyse (16, 18) en fonction de données de réglage consignées sur la base des données transmises.
